# EUROPÄISCHE PATENTSCHRIFT

(11) **EP 3 014 234 B1**
(45) Veröffentlichungstag und Bekanntmachung des Hinweises auf die Patenterteilung: **07.07.2021**
(21) Anmeldenummer: 14733622.6
(22) Anmeldetag: 26.06.2014
(51) Int. Cl.: G01L 19/00, G01L 19/06, G01L 19/14, G01K 13/02, D06F 39/04, D06F 34/22, G01N 21/53, A47L 15/42

(54) **SENSOR**
SENSOR
CAPTEUR

(30) Priorität: 27.06.2013 DE 102013010687; 27.06.2013 DE 102013010686; 27.06.2013 DE 102013010688; 27.06.2013 DE 102013010690
(43) Veröffentlichungstag der Anmeldung: 04.05.2016
(73) Patentinhaber: Marquardt Mechatronik GmbH, 78604 Rietheim-Weilheim (DE)
(72) Erfinder: REIDINGER, Lukas, 78665 Frittlingen (DE); AICHELE, Immanuel, 71144 Steinenbronn (DE); FAHRLÄNDER, Klaus, 78554 Aldingen (DE)
(74) Vertreter: Jostarndt Patentanwalts-AG
(86) Internationale Anmeldenummer: PCT/EP2014/063562
(87) Internationale Veröffentlichungsnummer: WO 2014/207125

(56) Entgegenhaltungen:
- WO-A1-2010/108961
- WO-A1-2010/112632
- DE-A1-102008 025 045
- DE-A1-102011 119 323
- JP-A- S60 205 236
- US-A1- 2006 055 927

## Beschreibung

Die Erfindung betrifft eine Messvorrichtung nach dem Oberbegriff des Patentanspruchs 1.

Derartige Messvorrichtungen werden zur Messung von Messgrößen eines Fluids in der Hausgeräte- und Haustechnikindustrie verwendet. Insbesondere sind diese Messvorrichtungen für Haushaltsgeräte, wie Waschmaschinen, Geschirrspülmaschinen, Nass- und/oder Trockensaugem o. dgl. oder für sonstige wasserführende Teile von Hausgeräten, bestimmt.

Eine solche Messvorrichtung zur Messung einer Messgröße eines Fluids ist bekannt. Die Messvorrichtung besitzt ein Gehäuse. Im Gehäuse befindet sich eine Messkomponente zur Messung der Messgröße. Ist die Messung mehrerer Messgrößen erforderlich, so sind die entsprechenden Messvorrichtungen mit der jeweils zugehörigen Peripherie, wie Kabelanschluss, Schnittstellen, Stecker o. dgl., im Hausgerät vorzusehen. Neben dem erhöhten Bedarf an Bauraum im Hausgerät sind hierfür auch höhere Kosten die Folge, was dem Einsatz in preiskritischen Anwendungen im Hausgerätesektor entgegensteht.

Aus der WO 2010/112632 A1 ist eine Messvorrichtung bekannt, bei der eine erste Messkomponente zur Messung des Drucks des Fluids, eine zweite Messkomponente zur Messung der Temperatur des Fluids und eine dritte Messkomponente zur Messung der Trübung des Fluids in dem einen Gehäuse angeordnet sind, und zwar bevorzugterweise im Gehäuse integriert angeordnet sind. Insbesondere sind dabei mehrere Messgrößen des Fluids, bei denen es sich vorzugsweise um Reinigungsparameter für den Betrieb des Hausgerätes handeln kann, gleichzeitig messbar. Beispielsweise kann eine solche Messvorrichtung zur Messung der Trübung des im Arbeitsraum des Haushaltsgeräts befindlichen, als Waschflüssigkeit verwendeten Fluids dienen. Die Messvorrichtung wird derart im Haushaltsgerät eingebaut, dass das Gehäuse in den Arbeitsraum hineinragt und somit eine im Fluid befindliche und/oder dem Fluid ausgesetzte Oberfläche besitzt. Es besteht die Gefahr, dass im Fluid befindliche Verschmutzungen sich auf dem Gehäuse bzw. auf dessen Oberfläche ablagern und dadurch die Eigenschaften der Messvorrichtung verändern.

Weitere Messvorrichtungen zur Messung des Drucks eines Fluids sind in den Dokumenten DE 10 2008 025 045 A1, WO2010112632 und DE 10 2011 119 323 A1 beschrieben. Ein mit einer Isolierschicht umhülltes Sensorelement ist in der WO 2010/108961 A1 gezeigt. Das Dokument US2006055927 offenbart einen Trübungssensor.

Der Erfindung liegt die Aufgabe zugrunde, die Messvorrichtung im Hinblick auf deren Funktionalität zur Messung mehrerer Messgrößen weiterzuentwickeln. Der Erfindung liegt weiterhin die Aufgabe zugrunde, die Messvorrichtung derart weiterzuentwickeln, dass deren Beeinträchtigung durch Verschmutzungen verringert ist.

Diese Aufgabe wird bei einer gattungsgemäßen Messvorrichtung durch die kennzeichnenden Merkmale des Anspruchs 1 gelöst.

Bei der erfindungsgemäßen Messvorrichtung ist wenigstens ein Teil der Oberfläche des Gehäuses, und zwar insbesondere zu dessen Benetzung durch das Fluid, hydrophil ausgestaltet. Realisiert ist dadurch vorteilhafterweise ein konstantes Benetzungsverhalten für das Fluid auf das in den Arbeitsraum hineinragende Gehäuse der Messvorrichtung. Beispielsweise ist das Benetzungsverhalten für Wasser auf der medienseitigen Oberfläche eines Trübungssensors konstant gehalten. Dadurch wird wiederum die Gefahr der Ablagerung von Verschmutzungen auf dem Gehäuse verringert.

Geschaffen ist somit ein Multisensor, bei dem ein Druck-, Trübungs- und Temperatursensor in einem Gehäuse, insbesondere zur Detektierung von Reinigungsparametern in einer Wasch- und/oder Spülmaschine, integriert ist. Vorteilhafterweise ist durch diese Integration einer Drucksensor-, einer Temperatursensor- und einer Trübungssensoreinheit in ein Gesamtgehäuse eine Reduzierung der Schnittstellen, insbesondere bei einer Wasch-und/oder Spülmaschine, erzielt. Dabei sind alle Anforderungen, die an die Werkstoffe, die Messsysteme, den Formfaktor, die Schutzklasse o. dgl. gestellt werden, erfüllt. Außerdem ist der erfindungsgemäße Sensor so gestaltet, dass eine Variantenbildung wie folgt realisierbar ist:
- Reiner Drucksensor,
- Drucksensor mit integriertem Temperaturfühler (mit einem NTC- oder einem PTC-Widerstand),
- Zusätzlich oder auch nur ein Trübungssensor.

Weitere Ausgestaltungen der Erfindung sind Gegenstand der Unteransprüche.

Das Gehäuse besteht aus einem Gehäusekörper und einem Gehäusedeckel. Der Einfachheit halber können die Messkomponenten am und/oder im Gehäusekörper angeordnet sein. Zwecks einfacher Montage kann der Gehäusedeckel am Gehäusekörper verrastet befestigt sein.

Die erste Messkomponente umfasst eine im und/oder am Gehäuse angeordnete Membran. Zur Steigerung der Funktionssicherheit kann ein elastisches Element zur Rückstellung der Membran vorgesehen sein. In kompakter Anordnung kann ein Signalgeber mit der Membran und/oder dem elastischen Element in Wirkverbindung stehen. In einfacher Ausgestaltung kann ein Signalaufnehmer mit dem Signalgeber, insbesondere magnetisch, zur Erzeugung der Messgröße zusammenwirken. Zwecks kompakter Ausführung kann das elastische Element in der Art einer scheibenförmigen Blattfeder ausgestaltet sein. Die Blattfeder kann eine kreisförmige Gestalt besitzen. Zwecks guter Funktionssicherheit kann die Blattfeder ein vom Zentrum zum Randbereich der Blattfeder spiralförmig verlaufendes Federelement aufweisen. Zur einfachen Montage kann der Signalgeber am elastischen Element in dessen Zentrum, insbesondere durch Verkleben, befestigt sein.

In einfacher Art und Weise kann der Signalgeber aus einem Magnet, insbesondere aus einem Permanentmagnet, bestehen. Der Signalaufnehmer kann aus einem das vom Magneten erzeugte Magnetfeld detektierenden Positionssensor, insbesondere aus einem Hallsensor, bestehen. Vor äußeren Einflüssen geschützt können die Membran und das elastische Element sowie der Signalgeber und der Signalaufnehmer im Inneren des Gehäuses angeordnet sein. Zweckmäßigerweise kann dann das Gehäuse, und zwar insbesondere der Gehäusedeckel, eine Öffnung zur Zuführung des Fluids zur Membran aufweisen.

Die zweite Messkomponente umfasst einen im und/oder am Gehäuse angeordneten Temperaturfühler. Der Einfachheit halber kann der Temperaturfühler im Gehäuse befestigt sein. Der Temperaturfühler ragt in einen Gehäuseansatz, insbesondere in der Art einer höckerförmigen Ausbauchung, am Gehäusedeckel hinein. In kostengünstiger Art und Weise kann als Temperaturfühler ein NTC-Widerstand, ein PTC-Widerstand o. dgl. vorgesehen sein. Zwecks einfacher Montage kann der Signalaufnehmer der ersten Messkomponente auf einer Leiterplatte befestigt sein. Dabei kann es sich anbieten, dass die Leiterplatte im Gehäusekörper fixiert ist. In kompakter Anordnung kann der Temperaturfühler der zweiten Messkomponente mit der Leiterplatte in elektrischer Verbindung stehen.

Die dritte Messkomponente umfasst einen Sender sowie einen Empfänger für optische Strahlung, insbesondere für Infrarot-Strahlung, sowie eine zwischen dem Sender und dem Empfänger befindliche Messstrecke für das Fluid. Der Sender und/oder der Empfänger sind in einem Ansatz am Gehäusedeckel, insbesondere in der Art einer höckerförmigen Ausbauchung, angeordnet. Zweckmäßigerweise kann der Ansatz wenigstens im Bereich des Senders und/oder des Empfängers für die optische Strahlung weitgehend transparent sein.

Zur einfachen Montage kann der Sender und/oder der Empfänger auf einem in den Ansatz hineinragenden Finger einer Leiterplatte befestigt sein. Dabei kann es sich anbieten, dass die Leiterplatte im Gehäusekörper fixiert ist. In einfacher Art und Weise kann als Sender eine Leuchtdiode vorgesehen sein. Desweiteren kann es sich anbieten, dass als Empfänger ein Fototransistor verwendet ist.

Zwecks einfacher elektrischer Verbindung kann sich auf der Leiterplatte ein Anschlusskontakt für das von der jeweiligen Messkomponente erzeugte Signal befinden. In kompakter sowie betriebssicherer Art und Weise kann die Leiterplatte mittels eines den Anschlusskontakt umgebenden Führungsrahmens im Gehäusekörper fixierbar sein. Desweiteren kann zur einfachen Montage ein Stecker auf den Anschlusskontakt zur Signalweiterleitung, insbesondere am Führungsrahmen, aufsteckbar sein.

Die Messkomponente kann eine im und/oder am Gehäuse angeordnete Membran umfassen. Da die Membran mit dem Fluid in Kontakt steht, können Verunreinigungen im Fluid sich auf der Membran ablagern, was zur Verfälschung der Messung führt. Desweiteren können diese Verunreinigungen die Membran auch schädigen, was letztendlich zum Ausfall der Messvorrichtung führen kann. Der Erfindung liegt bevorzugterweise weiterhin die Aufgabe zugrunde, die Messvorrichtung im Hinblick auf deren Betriebs- und/oder Funktionssicherheit weiterzuentwickeln.

Diese Aufgabe wird bei einer gattungsgemäßen Messvorrichtung dadurch gelöst, dass ein die Membran überdeckender Dom am Gehäuse angeordnet ist. Dadurch ist eine Art von Kammer im Gehäuse gebildet, so dass die Membran vor direktem, mechanischem Einwirken von Fremdkörpern geschützt ist. Weiter ist am Gehäuse eine den Dom umgebende Kontur angeordnet, derart dass seitlich kommende Fremdkörper abgefangen und/oder über den innerhalb der Kontur liegenden Dom abgelenkt werden. Am Dom und/oder an der Kontur und/oder in einer Vertiefung zwischen dem Dom sowie der Kontur ist wenigstens eine Öffnung, bevorzugterweise sind am Dom einander gegenüberliegende, schmale Öffnungen, befindlich, derart dass das Fluid in die Kammer und somit zur Membran gelangt. Geschaffen ist somit eine Bauteilausgestaltung für die Messvorrichtung zur Vermeidung von Verletzungen der Drucksensormembran, die insbesondere aus Feststoffsilikon besteht.

Die erste Messkomponente zur Messung des Drucks des Fluids ist im Gehäuse angeordnet. Weiter ist die zweite Messkomponente zur Messung der Temperatur des Fluids im Gehäuse angeordnet. Schließlich ist die dritte Messkomponente zur Messung der Trübung des Fluids in dem Gehäuse angeordnet.

Zur Steigerung der Funktionssicherheit kann ein elastisches Element zur Rückstellung der Membran vorgesehen sein. In kompakter Anordnung kann ein Signalgeber mit der Membran und/oder dem elastischen Element in Wirkverbindung stehen. In einfacher Ausgestaltung kann ein Signalaufnehmer mit dem Signalgeber, insbesondere magnetisch, zur Erzeugung der Messgröße zusammenwirken.

Zwecks kompakter Ausführung kann das elastische Element in der Art einer scheibenförmigen Blattfeder ausgestaltet sein. Die Blattfeder kann eine kreisförmige Gestalt besitzen. Zwecks guter Funktionssicherheit kann die Blattfeder ein vom Zentrum zum Randbereich der Blattfeder spiralförmig verlaufendes Federelement aufweisen. Zur einfachen Montage kann der Signalgeber am elastischen Element in dessen Zentrum, insbesondere durch Verkleben, befestigt sein.

In einfacher Art und Weise kann der Signalgeber aus einem Magnet, insbesondere aus einem Permanentmagnet, bestehen. Der Signalaufnehmer kann aus einem das vom Magneten erzeugte Magnetfeld detektierenden Positionssensor, insbesondere aus einem Hallsensor, bestehen. Vor äußeren Einflüssen geschützt können die Membran und das elastische Element sowie der Signalgeber und der Signalaufnehmer im Inneren des Gehäuses angeordnet sein.

Zwecks einfacher Montage kann der Signalaufnehmer auf einer Leiterplatte befestigt sein. Dabei kann es sich anbieten, dass die Leiterplatte im Gehäusekörper fixiert ist. Zwecks einfacher elektrischer Verbindung kann sich auf der Leiterplatte ein Anschlusskontakt für das von der Messkomponente erzeugte Signal befinden. In kompakter sowie betriebssicherer Art und Weise kann die Leiterplatte mittels eines den Anschlusskontakt umgebenden Führungsrahmens im Gehäusekörper fixierbar sein. Desweiteren kann zur einfachen Montage ein Stecker auf den Anschlusskontakt zur Signalweiterleitung, insbesondere am Führungsrahmen, aufsteckbar sein.

Es hat sich auch herausgestellt, dass Ungenauigkeiten bei der Messung mittels der Messkomponente auftreten können. Der Erfindung liegt bevorzugterweise weiterhin die Aufgabe zugrunde, die Messvorrichtung im Hinblick auf deren Messgenauigkeit weiterzuentwickeln.

Diese Aufgabe wird bei einer gattungsgemäßen Messvorrichtung dadurch gelöst, dass ein Bestandteil der Messkomponente in eine separate Bauteilfixierung, die insbesondere aus Kunststoff besteht, eingesetzt ist. Die Bauteilfixierung ist wiederum im Gehäuse befestigt. Zur Befestigung eignet sich dabei insbesondere das Verpressen der Bauteilfixierung im Gehäuse. Die Messkomponente kann einen im und/oder am Gehäuse angeordneten Temperaturfühler umfassen, wobei der Temperaturfühler als Bestandteil der Messkomponente in der Bauteilfixierung eingeklemmt sein kann. Erzielt ist bei der Erfindung vorteilhafterweise die maßgenaue Positionierung der Messkomponente, beispielsweise eines Thermoelements, und zwar insbesondere unter Berücksichtigung der elektrischen Schutzklasse II.

In kostengünstiger Art kann als Temperaturfühler ein NTC-Widerstand, ein PTC-Widerstand o. dgl. vorgesehen sein. Schließlich kann in einfacher Art und Weise die Bauteilfixierung direkt im Gehäusedeckel, und zwar insbesondere im Gehäuseansatz, verpresst sein.

Zwecks einfacher Montage kann der Temperaturfühler mit einer Leiterplatte in elektrischer Verbindung stehen. Dabei kann es sich anbieten, dass die Leiterplatte im Gehäusekörper fixiert ist. Zwecks einfacher elektrischer Verbindung kann sich auf der Leiterplatte ein Anschlusskontakt für das von der Messkomponente erzeugte Signal befinden. In kompakter sowie betriebssicherer Art und Weise kann die Leiterplatte mittels eines den Anschlusskontakt umgebenden Führungsrahmens im Gehäusekörper fixierbar sein.

Desweiteren kann zur einfachen Montage ein Stecker auf den Anschlusskontakt zur Signalweiterleitung, insbesondere am Führungsrahmen, aufsteckbar sein.

Die Messvorrichtung kann ein Gehäuse besitzen, das eine Gehäusewandung aufweist. Bei der bekannten Messvorrichtung sind aufwendige Maßnahmen zur Abdichtung am Gehäuse vorgesehen, um die Messkomponente vor Beeinträchtigungen zu schützen. Der Erfindung liegt bevorzugterweise weiterhin die Aufgabe zugrunde, die Messvorrichtung im Hinblick auf deren Abdichtung weiterzuentwickeln.

Diese Aufgabe wird bei einer gattungsgemäßen Messvorrichtung gemäß einer ersten Ausbildung dadurch gelöst, dass drei elektrische Isolationsschichten zwischen der Messkomponente und dem Fluid und/oder den weiteren elektrischen Bauteilen angeordnet sind. Insbesondere umgeben zusätzlich zur elektrisch isolierenden Gehäusewandung zwei weitere elektrische Isolationsschichten die Messkomponente, wobei in bevorzugter Weise die Isolationsschichten form- und/oder stoffschlüssig aneinander gefügt sein können. Damit ist vorteilhafterweise die elektrische Schutzklasse II für die Messvorrichtung realisiert. Gemäß einer zweiten Ausbildung ist ein elektrisch isolierender Verguss zwischen der Messkomponente und der Gehäusewandung vorgesehen, wobei der Verguss eine Stärke von mindestens 2 mm besitzt. In bevorzugter Weise können der Verguss und die Gehäusewandung form- und/oder stoffschlüssig aneinander gefügt sein. Geschaffen ist damit vorteilhafterweise ein Verguss für die Messvorrichtung zur Realisierung der elektrischen Schutzklasse II, insbesondere der Verguss von optischen Bauteilen eines Trübungssensors.

In kostengünstiger Art und Weise kann als Temperaturfühler ein NTC-Widerstand, ein PTC-Widerstand o. dgl. vorgesehen sein. In einfacher Art und Weise kann der Temperaturfühler eine Ummantelung als elektrische Basisisolierung, eine elektrische Zusatzisolierung in der Art eines Vergusses sowie die Gehäusewandung als weitere elektrische Isolierung aufweisen. Zwecks guter Isoliereigenschaft können die Basisisolierung und/oder die Zusatzisolierung aus Epoxidharz bestehen.

Zweckmäßigerweise kann der Ansatz wenigstens im Bereich des Senders und/oder des Empfängers für die optische Strahlung weitgehend transparent sein.

Zur einfachen Montage kann der Sender und/oder der Empfänger auf einem in den Ansatz hineinragenden Finger einer Leiterplatte befestigt sein. Dabei kann es sich anbieten, dass die Leiterplatte im Gehäusekörper fixiert ist. In einfacher Art und Weise kann als Sender eine Leuchtdiode vorgesehen sein. Desweiteren kann es sich anbieten, dass als Empfänger ein Fototransistor verwendet ist. Der Einfachheit halber kann das Innere des Gehäuses im Bereich des Senders und/oder des Empfängers, und zwar insbesondere der Ansatz, mit einem für optische Strahlung weitgehend transparenten Verguss als elektrische Isolation versehen sein. Zwecks guter Isoliereigenschaft kann der Verguss aus Silikonharz bestehen. Zwecks einfacher Montage kann die Messkomponente mit einer Leiterplatte in elektrischer Verbindung stehen. Zwecks einfacher elektrischer Verbindung kann sich auf der Leiterplatte ein Anschlusskontakt für das von der jeweiligen Messkomponente erzeugte Signal befinden. In kompakter sowie betriebssicherer Art und Weise kann die Leiterplatte mittels eines den Anschlusskontakt umgebenden Führungsrahmens im Gehäusekörper fixierbar sein. Desweiteren kann zur einfachen Montage ein Stecker auf den Anschlusskontakt zur Signalweiterleitung, insbesondere am Führungsrahmen, aufsteckbar sein. Der Einfachheit halber kann es sich anbieten, dass die Messkomponente bis zur Leiterplatte mit einem Verguss als elektrische Isolation versehen ist.

In einfacher Art und Weise kann die Hydrophilierung der Oberfläche des Gehäuses durch eine Plasmaaktivierung der Oberfläche erzeugt werden. Dabei kann es sich anbieten, dass die Plasmaaktivierung unter Sauerstoffatmosphäre und/oder unter Niederdruck vorgenommen wird. Ebenfalls in einfacher Weise kann die Hydrophilierung auch durch eine Fluorierung des Werkstoffes für das Gehäuse, insbesondere des Werkstoffes für wenigstens einen Teil der Oberfläche und/oder für die gesamte Oberfläche des Gehäuses, erzeugt werden.

Zweckmäßigerweise kann der Ansatz wenigstens im Bereich des Senders und/oder des Empfängers für die optische Strahlung weitgehend transparent sein.

Zur einfachen Montage können der Sender und/oder der Empfänger auf einem in den Ansatz hineinragenden Finger einer Leiterplatte befestigt sein. Dabei kann es sich anbieten, dass die Leiterplatte im Gehäusekörper fixiert ist. In einfacher Art und Weise kann als Sender eine Leuchtdiode vorgesehen sein. Desweiteren kann es sich anbieten, dass als Empfänger ein Fototransistor verwendet ist.

Zwecks einfacher Montage kann die Messkomponente mit einer Leiterplatte in elektrischer Verbindung stehen. Eine einfache elektrische Verbindung kann dadurch hergestellt sein, dass sich auf der Leiterplatte ein Anschlusskontakt für das von der jeweiligen Messkomponente erzeugte Signal befindet. In kompakter sowie betriebssicherer Art und Weise kann die Leiterplatte mittels eines den Anschlusskontakt umgebenden Führungsrahmens im Gehäusekörper fixierbar sein. Desweiteren kann zur einfachen Montage ein Stecker auf den Anschlusskontakt zur Signalweiterleitung, insbesondere am Führungsrahmen, aufsteckbar sein.

Für besonders bevorzugte Ausgestaltungen der erfindungsgemäßen Messvorrichtung ist nachfolgendes festzustellen.

Der gesamte Sensor ist so ausgelegt, dass jeweils die Schutzklasse II erfüllt wird. Dies bedeutet, dass beim Druck- und/oder Temperatursensor drei Isolationsschichten vorhanden sind, die die geforderten Normforderungen erfüllen. Gleichzeitig ist die Trübungssensorleiterplatte entweder so ausgelegt, dass bei eindringendem Wasser ein Kurzschluss unverzüglich ausgelöst wird und somit eine galvanische Trennung im Kundengerät ausgelöst wird. Die zweite Möglichkeit der Realisierung für die Schutzklasse II im Trübungssensorbereich wird durch eine weitere Vergussmasse realisiert, die zum einen optisch über die Lebensdauer transparent bleibt und so die Sensorkennlinie nicht beeinflusst und außerdem als 2 mm starke Basisisolierung dient. In den Bereichen, wo dies nicht möglich ist, kann auf die Leiterplatte ein Schutzlack aufgetragen werden, die dann als dritte Isolationsschicht zählt und somit erneut die Schutzklasse II erfüllt. Bereiche, die bei einer mechanischen Verletzung der Drucksensormembran Wasser aufnehmen können, werden durch bestimmte Geometrien am Gehäuse gezielt entwässert. Dies dient dazu, dass kein Wasser auf stromführende Leitungen treffen kann und in den Maschinenboden abläuft, und zwar ähnlich wie bei Kondenswasserschutzgeometrien.

Um neben der Trübung und der Temperatur des Mediums auch den Füllstand in einer Wasch- oder Spülmaschine durch einen integrierten Sensor erfassen zu können, kann der Drucksensor nicht wie bisher über eine Luftfalle indirekt den ausgeübten Druck des Wassers ermitteln, sondern muss ebenfalls direkt vom Medium ausgelenkt werden. Dies bedeutet jedoch, dass unerwünschte Schmutzpartikel und/oder Kleinteile die Sensormembran, die zur Übertragung der Auslenkung des Messsystems dient, erreichen und schädigen oder sich dort dauerhaft ablagern können. Diese Fremdkörper können beispielsweise Textilfasern, Sedimente, Büroklammern, Nadeln oder auch ein BH-Bügel sein.

Aus dieser Problemstellung ergeben sich verschiedene Faktoren, die bei einer Ausgestaltung der sich im Medium befindenden Kontur des Sensors berücksichtigt werden müssen.
- Das Medium fließt durch die Trommelbewegung des Hausgeräts in einem definierten Vektor, der sich je nach Drehrichtung gegen den Uhrzeigersinn (UZS) oder mit dem Uhrzeigersinn (UZS) von links kommend oder von rechts kommend über die im Medium befindenden Sensorkonturen hinwegbewegt. Dadurch ergeben sich ebenso nachvollziehbare Wege, auf denen sich Fremdkörper je nach Strömungsintensität bewegen. Außerdem stellt sich ein gewisser Selbstreinigungseffekt durch diese Bewegung ein bzw. es werden Schmutzpartikel wieder abgelöst.
- Durch die Sedimentablagerungen über die Lebensdauer werden kleine Öffnungen zugesetzt.
- Spitze, dünne Gegenstände können sich durch Öffnungen am Sensor der Membran annähern.
- Durch die Ausgestaltung darf keine Luft eingeschlossen werden, da diese als weiteres Dämpfungssystem wirken kann (Kuppendom).

Zum Abfangen von seitlich kommenden Fremdkörpern ist eine umlaufende Kontur auskonzipiert, die diese Fremdkörper über einen inneren Dom ablenkt. Dieser innere Dom schützt die Membran innerhalb des Sensors vor direktem, mechanischem Einwirken von Fremdkörpern. Sie besitzt zudem gegenüberliegende, schmale Öffnungen, die es dem druckgebenden Medium erlauben, das Drucksystem zu erreichen. Da diese Schlitze es spitzen Teilen (Nadeln, Büroklammern etc.) ermöglichen in das Innere des Sensors einzudringen, muss die umlaufende Kontur so gewählt werden, dass kein möglicher Aufstellwinkel es einem Fremdkörper erlaubt, weiter vorzudringen. Die Öffnung darf zudem nicht zu schmal ausgelegt werden, da sonst Textilfasern und Waschmittel- bzw. Schmutzsedimente diese zusetzen könnten.

Durch die Konturen wird ein Teil des Mediums eingeleitet und beruhigt, so dass es bei Kontakt mit der Membran so wenig Strömungen wie möglich erzeugt, die den Messfehler erhöhen könnten.

Um im inneren Dom keine Luftblase beim Befüllen einzuschließen, sind ringförmig an dessen Spitze Entlüftungsschlitze vorgesehen, durch die ebenfalls keine Fremdkörper eindringen können.

Zur genauen Regelung eines Waschprozesses, beispielsweise in einer Waschmaschine oder einer Spülmaschine, wird unter anderem die Temperatur des Reinigungswassers gemessen. Um den Energieverbrauch zu verringern und einen optimalen Waschprozess einstellen zu können, muss die Ansprechzeit eines Temperaturfühlers unter 20 sec ausfallen. Außerdem muss die Schutzklasse II nach der Norm DIN EN 60335 erfüllt werden. Dies bedeutet, dass drei unabhängige Isolationsschichten mit einer bestimmten Mindestdurchschlagspannung zwischen Wasser und stromführenden Bauteilen bzw. Leitungen vorhanden sein müssen.

Die erfindungsgemäße Lösung beschreibt den Kompromiss aus Mindestschichtdicken der einzelnen Isolationsschichten, eine möglichst hohe Wärmeleitfähigkeit der Einzelwerkstoffe trotz neutraler Kosten und Realisierung der geringst möglichen Fertigungstoleranz. Hierfür wird der Temperaturfühler in eine separate Bauteilfixierung aus Kunststoff eingeklemmt und diese anschließend direkt in der Deckelkontur verpresst, wodurch die Toleranzkette deutlich reduziert wird. Somit kann die von den Kunden geforderte kurze Ansprechzeit ohne hohe Standardabweichung realisiert werden. Die verwendeten Kunststoffe und die Vergussmasse sind so ausgelegt, dass alle Normvorgaben erreicht werden.

Derzeit werden in Wasch- und/oder Spülmaschinen Trübungssensoren mit Funktionserdung verwendet. Dies bedeutet einen höheren Aufwand bei dem Kabelbaum und dem Netzteil. Da außer dem Gehäuse bei solch einem Sensor keinerlei Schutz zwischen den elektronischen Bauteilen und dem zu messenden Medium besteht, ist dies für den Personenschutz notwendig.

Die Schutzklasse II wird aber auch dann erreicht, wenn mindestens eine Wandungsstärke von 2 mm und eine ausreichende Durchschlagsfestigkeit gegeben ist und/oder drei Isolationsschichten mit geringer Wandstärke und ausreichender Durchschlagsfestigkeit zwischen dem Medium und den elektrischen Bauteilen vorhanden sind. Solche Schichten müssen sich aber auch in der optischen Messstrecke des Sensors befinden und haben deshalb weitere Anforderungen, die ebenfalls erfüllt werden müssen.

Die chemische Industrie bietet immer bessere Varianten von Vergussmassen, die speziell für den Einsatz bei optischen Bauteilen ausgelegt sind. Dabei sind die Wärmeleitfähigkeit, die Vergussqualität, die Transparenz, die Verarbeitbarkeit, die elektrischen Anforderungen und die thermische Anforderungen entscheidend. Durch die Auswahl von mehreren Silikonvergusssystemen kann dies ohne große Änderungen in der Sensorkennlinie und dem Sensoraufbau realisiert werden. Der Verguss besitzt im verbauten Zustand eine Stärke von 2 mm, was zur Erfüllung der Schutzklasse II ausreichend ist. Bei Trübungssensorvarianten, bei denen sich der Bauraum eingeschränkter darstellt, muss auf eine Mehrlayerlösung zurückgegriffen werden. Dabei müssen alle leitenden Bauteile des Sensors von mindestens drei Schichten umschlossen sein, nämlich von einer Basisisolierung und zwei Schutzisolierungen. Hierbei muss keine Schicht eine Mindeststärke besitzen, sondern jede lediglich die benötigte Durchschlagsfestigkeit aufweisen.

Je nach Kombination zwischen Gehäusematerial und Vergussmasse ist ein stoffschlüssiger und/oder formschlüssiger Phasenübergang vorhanden, der nach Auflösung und Sender-/Empfänger-Kombination eine große Rolle spielen kann. Falls eine formschlüssige Verbindung nicht den Anforderungen entspricht, kann durch eine bessere Abstimmung der Materialien oder durch eine zusätzliche Erhöhung der Oberflächenenergie bzw. -polarität eine stoffschlüssige Verbindung hergestellt werden. Diese Maßnahmen würden auch eine Phasenübergangsänderung durch unterschiedliche Ausdehnungskoeffizienten verringern, wobei in solch einem Fall durch die gezielte Verwendung von elastischen Silikonverguss deutlich bessere Ergebnisse erzielt werden können.

Zur Reduzierung der Spülgänge im Waschprozess von Wasch- und/oder Spülmaschinen werden seit mehreren Jahren Trübungssensoren eingesetzt, die die Schmutzpartikeldichte im zu messenden Medium bestimmen und dadurch den Wassereinsatz sowie die Anzahl der Spülgänge variieren. Seit einigen Jahren wird auch die Dosiermenge von Flüssigwaschmittel damit gesteuert.

Da diese Messung im Direktkontakt mit der Lauge und/oder mit Fremdkörpern steht, verschlechtert sich durch Anhaftungen von Flusen, Kalk und/oder Waschmittelrückständen die Sensorkennlinie während der Betriebsdauer signifikant. Deshalb muss im Prozess vor dem letzten Spülgang der neue Trübungswert von klarem Wasser in der Steuerung gespeichert werden.

Um hierfür eine Abhilfe zu schaffen, schlägt die Erfindung vor, dass eine dauerhafte Hydrophilierung der Oberfläche des Sensors vorgenommen wird. Mit Hilfe einer solchen Hydrophilierung wird eine möglichst lange sowie eine gleichmäßige Benetzung der Oberfläche des Sensors erreicht.

Für die Hydrophilierung können mehrere Verfahren zum Einsatz kommen, die entweder in der Fertigung direkt angewendet werden können oder als Schüttgut bei Lohnbeschichtern applizierbar sind. Somit sind die Kosten deutlich geringer und eine Umstellung in der Serie ist für den Sensor realisierbar. Zudem weist das eingesetzte Gehäusematerial die Besonderheit auf, dass nach der Oberflächenaktivierung dieser Effekt bei Lagerung lange bestehen bleibt und sich bei Einsatz des Sensors im Medium eine dauerhafte - teils sogar eine gestiegene - Hydrophilie einstellt.

Zur Auswahl steht zum einen eine Plasmaaktivierung unter Sauerstoffatmosphäre, die direkt in der Fertigungslinie durchführbar ist. Zum anderen kann eine Aktivierung im Niederdruck vorgenommen werden, die den gleichen Effekt erzielt wie unter Atmosphäre. Jedoch sind das Aktivierungsniveau und die Aktivierungshaltbarkeit hierbei deutlich erhöht. Die Aktivierung kann außerdem im Batchverfahren durchgeführt werden.

Als weitere Möglichkeit für die Hydrophilierung bietet sich die Fluorierung des Werkstoffes für das Gehäuse an. Dabei kann eine große Anzahl Gehäuse gleichzeitig behandelt werden, da sehr große Prozesskammern bei Lohnbeschichtern vorhanden sind. Auch die Prozessdauer ist sehr gering.

Alle diese Verfahren bieten gute Ergebnisse, wobei jedoch für jeden Gehäusewerkstoff das optimale bzw. das noch ausreichende Verfahren ausgewählt werden kann.

Die mit der Erfindung erzielten Vorteile bestehen insbesondere darin, dass eine Reduzierung der Schnittstellen im Kundengerät erreicht ist. Weiter ist eine direkte Druckmessung am Spülwasser im Hausgerät ohne die Verwendung einer Luftfalle möglich. Desweiteren wird bei der Trübungsmessung kein galvanisch trennendes Netzteil mehr benötigt. Schließlich bietet die erfindungsgemäße Messvorrichtung eine erweiterte Funktionalität und ist sehr kompakt sowie kostengünstig.

Weitere mit der Erfindung erzielte Vorteile bestehen insbesondere darin, das ein funktionssowie betriebssicherer Drucksensor mit direktem Medienkontakt in Wasch- und/oder Spülmaschinen realisiert ist. Weiterhin sind kundenseitige Einsparungen durch die Reduzierung der Schnittstellen mechanisch und/oder elektrisch ermöglicht.

Noch weitere mit der Erfindung erzielte Vorteile bestehen insbesondere darin, dass eine hohe Integrationsfähigkeit in bestehende Sensoren zur Einsparungen der Schnittstellen beim Kunden erreicht ist. Desweiteren ist eine Realisierung des Sensors aus Kunststoff in kostengünstiger Art ermöglicht. Schließlich ist auch eine Reduzierung des Kabelbaums in stationären Haushaltsreinigungsgroßgeräten erreicht.

Nochmals weitere mit der Erfindung erzielte Vorteile bestehen insbesondere darin, dass eine Reduzierung des Kabelbaums in der Applikation, in der die Messvorrichtung eingesetzt wird, erfolgt. Desweiteren ist auch eine Reduzierung der Netzteilkosten gegeben. Weiterhin ist Sicherheit vor einer Verfälschung der Trübungsmessung gegeben. Schließlich wird auch noch eine Verbesserung der Resistenz gegen Schock und/oder Vibration für die Messvorrichtung erzielt. Insgesamt ist somit eine Erhöhung der Sicherheit für den Benutzer der Messvorrichtung sowie eine Verringerung der Kosten als auch eine Steigerung der Lebensdauer und/oder der Funktionssicherheit für die Messvorrichtung gegeben.

Abermals weitere mit der Erfindung erzielte Vorteile bestehen insbesondere darin, dass eine deutliche Verbesserung im Langzeitverhalten der Sensorkennlinie erreichbar ist. Außerdem ist die Reduzierung der stochastischen Schmutz- und/oder Ablagerungsverteilung auf ein Minimum gegeben. Schließlich wird auch der Waschprozess durch eine bessere Nachkalibrierung oder auch den Wegfall einer Kalibrierung über die Lebensdauer des Sensors verbessert.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: eine Messvorrichtung in perspektivischer Ansicht,
- Fig. 2: die Messvorrichtung aus Fig. 1 in Explosionsdarstellung,
- Fig. 3: die Ansicht der Messvorrichtung von der Unterseite gemäß Richtung III in Fig. 1,
- Fig. 4: die Ansicht der Messvorrichtung von der Oberseite gemäß Richtung IV in Fig. 1,
- Fig. 5: einen Schnitt entlang der Line 5-5 in Fig. 3,
- Fig. 6: einen Schnitt entlang der Linie 6-6 in Fig. 3,
- Fig. 7: einen Schnitt entlang der Linie 7-7 in Fig. 4,
- Fig. 8: einen Schnitt entlang der Linie 8-8 in Fig. 4 und
- Fig. 9: ein Einzelteil der Messvorrichtung.

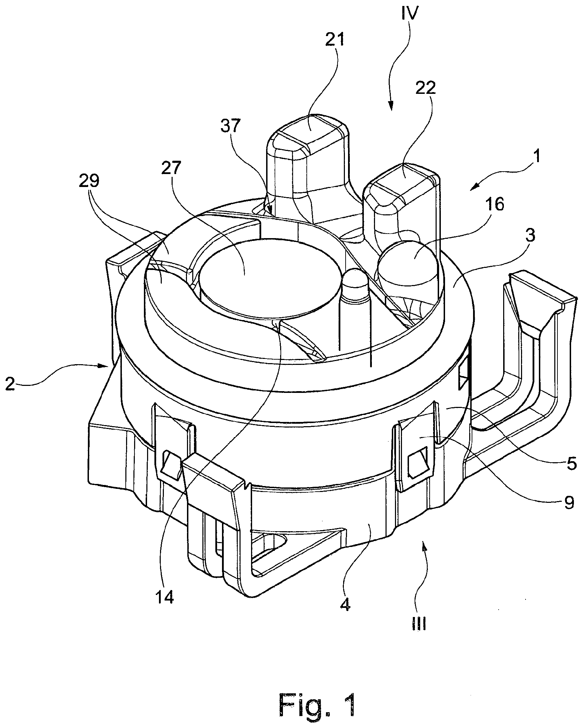

In Fig. 1 ist eine Messvorrichtung 1 zur Messung einer Messgröße eines Fluids zu sehen. Die Messvorrichtung 1 kann in Haushaltsgeräten, wie in Waschmaschinen, in Geschirrspülmaschinen o. dgl., zum Einsatz kommen, und zwar als Sensor zur Messung von Messgrößen des als Waschflüssigkeit verwendeten Fluids im Arbeitsraum des Haushaltsgeräts. So dient vorliegend der Sensor 1 zur Messung des Drucks und/oder der Trübung und/oder der Temperatur des als Waschflüssigkeit dienenden Wassers im Arbeitsraum.

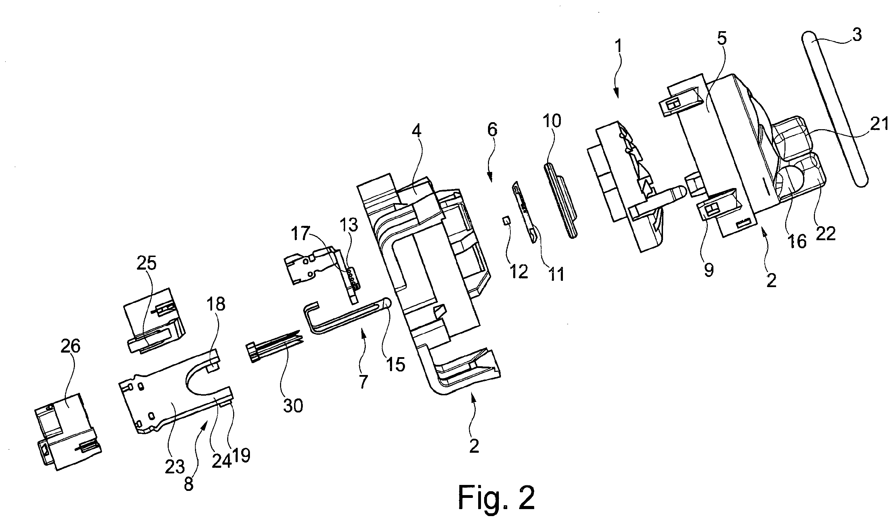

Der Sensor 1 weist ein Gehäuse 2 auf. Das Gehäuse 2 ist mittels eines O-Rings 3 als Dichtung derart im Hausgerät angebracht, dass ein Teil des Gehäuses 2 in den Arbeitsraum hineinragt und dieser Teil der Oberfläche 37 des Gehäuses 2 dort dem Fluid ausgesetzt ist. Der andere Teil des Gehäuses 2 befindet sich außerhalb des Arbeitsraums und wird mit den elektrischen Zuleitungen für den Sensor 1 verbunden. Das Gehäuse 2 besteht gemäß Fig. 2 aus einem Gehäusekörper 4 sowie einem Gehäusedeckel 5. Der Gehäusedeckel 5 ist mittels Rasthaken 9 am Gehäusekörper 4 verrastet befestigt.

Im Gehäuse 2 befindet sich die Messkomponente zur Messung der jeweiligen Messgröße. Wie der Fig. 2 entnommen werden kann, sind im Gehäuse 2 eine erste Messkomponente 6 zur Messung des Drucks des Fluids, eine zweite Messkomponente 7 zur Messung der Temperatur des Fluids sowie eine dritte Messkomponente 8 zur Messung der Trübung des Fluids integriert angeordnet. Somit sind mehrere Messgrößen des Fluids, wobei es sich vorzugsweise bei diesen Messgrößen um Reinigungsparameter für den Betrieb des Haushaltsgeräts handelt, gleichzeitig messbar. Die Messkomponenten 6, 7, 8 sind am und/oder im Gehäusekörper 4 angeordnet.

Die erste Messkomponente 6 zur Druckmessung umfasst eine im und/oder am Gehäuse 2 angeordnete Membran 10, wie man in Fig. 2 sieht. Es ist weiterhin ein elastisches Element 11 zur Rückstellung der Membran 10 vorgesehen. Ein Signalgeber 12 steht mit der Membran 10 und/oder mit dem elastischen Element 11 in Wirkverbindung. Schließlich wirkt ein Signalaufnehmer 13 mit dem Signalgeber 12 zur Erzeugung der Messgröße zusammen.

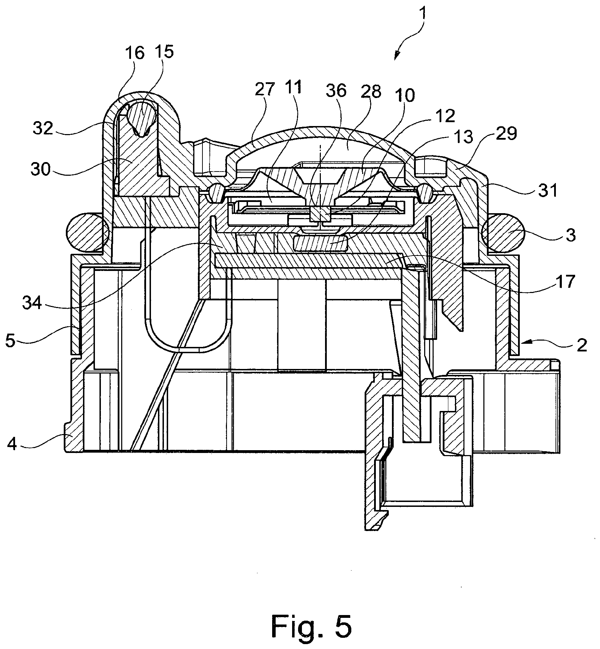

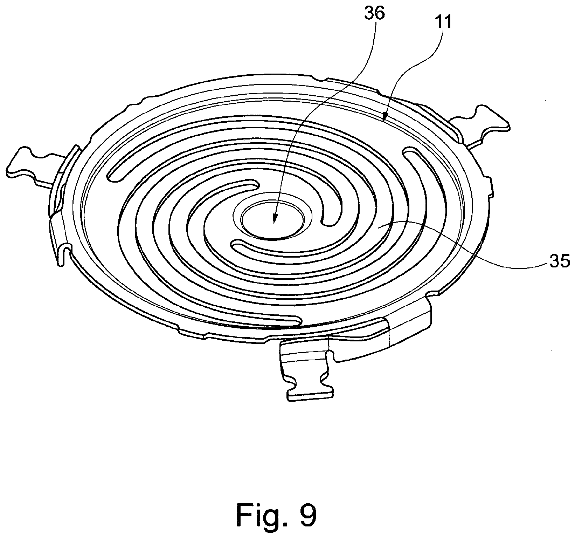

Das elastische Element 11 ist in der Art einer scheibenförmigen Blattfeder ausgestaltet, die als Einzelteil näher in Fig. 9 gezeigt ist. Die Blattfeder 11 besitzt eine kreisförmige Gestalt. Desweiteren weist die Blattfeder 11 ein vom Zentrum 36 zum Randbereich der Blattfeder 11 spiralförmig verlaufendes Federelement 35 auf. Der Signalgeber 12 ist gemäß Fig. 5 am elastischen Element 11 in dessen Zentrum 36 durch Verkleben befestigt.

Der Signalgeber 12 besteht aus einem Magnet, und zwar vorliegend aus einem Permanentmagnet. Der Signalaufnehmer 13 wirkt mit dem Signalgeber 12 magnetisch zusammen. Hierzu besteht der Signalaufnehmer 13 aus einem das vom Magneten 12 erzeugte Magnetfeld detektierenden Positionssensor, und zwar vorliegend aus einem Hallsensor. Die Membran 10 und das elastische Element 11 sowie der Signalgeber 12 und der Signalaufnehmer 13 sind im Inneren des Gehäuses 2 angeordnet, wie man anhand der Fig. 5 erkennt.

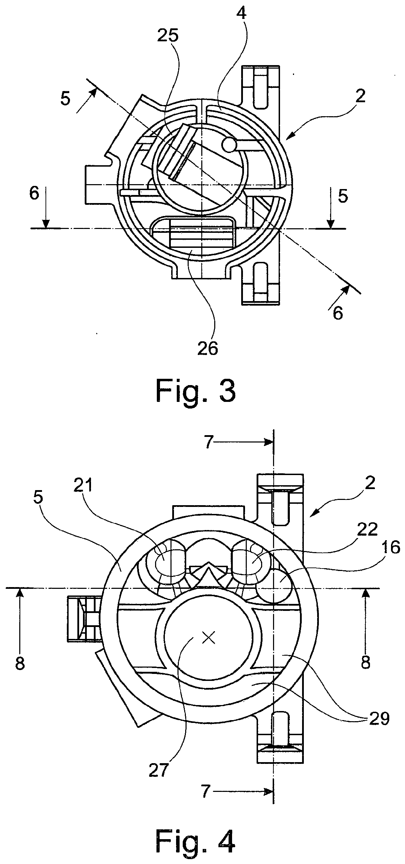

Zum Schutz der Membran 10 vor direktem, mechanischem Einwirken von Fremdkörpern ist ein die Membran 10 überdeckender Dom 27 am Gehäuse 2 angeordnet. Dadurch ist eine Kammer 28 im Gehäuse 2 gebildet, wie der Fig. 5 zu entnehmen ist. Damit das Fluid zur Membran 10 gelangt, weist das Gehäuse 2 bzw. der Gehäusedeckel 5 in Fig. 1 sichtbare Öffnungen 14 zur Zuführung des Fluids in die Kammer 28 auf. Genauer gesagt sind am Dom 27 gegenüberliegende, schmale Öffnungen 14 befindlich, derart dass das Fluid zur Membran 10 in der Kammer 28 gelangt. Weiterhin ist gemäß Fig. 1 oder Fig. 4 am Gehäuse 2 eine den Dom 27 umgebende Kontur 29 angeordnet, derart dass im Fluid befindliche, seitlich kommende Fremdkörper abgefangen und/oder über den innerhalb der Kontur 29 liegenden Dom 27 ablenkt werden. Die Öffnungen 14 können ebenfalls an der Kontur 29 und/oder in einer Vertiefung zwischen dem Dom 27 sowie der Kontur 29 angeordnet sein. Der Dom 27 sowie die Kontur 29 und die Vertiefung zwischen dem Dom 27 und der Kontur 29 sind am Gehäusedeckel 5 befindlich.

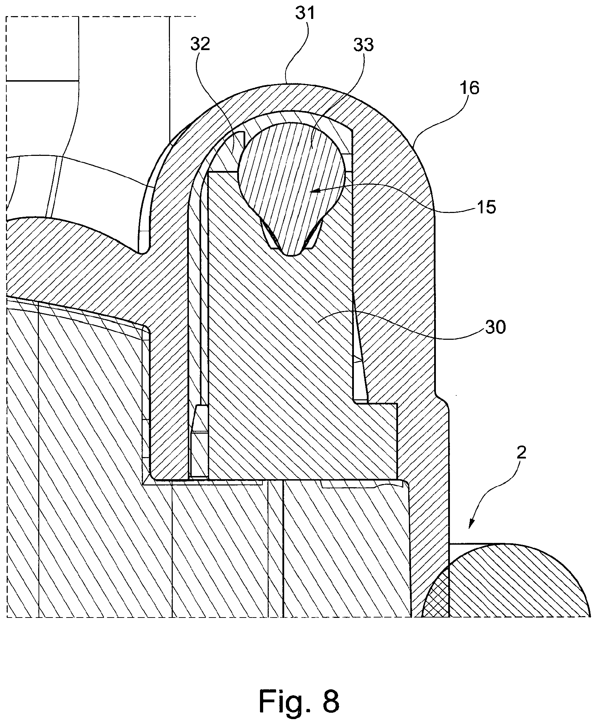

Wie man in Fig. 2 sieht, umfasst die zweite Messkomponente 7 einen im und/oder am Gehäuse 2 angeordneten Temperaturfühler 15. Der Temperaturfühler 15 ist im Gehäuse 2 befestigt. Der Temperaturfühler 15 ragt in einen Gehäuseansatz 16, der in der Art einer höckerförmigen Ausbauchung ausgestaltet ist, am Gehäusedeckel 5 hinein. Vorliegend ist als Temperaturfühler 15 ein NTC-Widerstand, ein PTC-Widerstand o. dgl. vorgesehen. Zur exakten Montage ist der Temperaturfühler 15 in eine separate Bauteilfixierung 30, die aus Kunststoff besteht, eingeklemmt, wie der Fig. 5 zu entnehmen ist. Die Bauteilfixierung 30 ist durch Verpressen im Gehäuse 2 befestigt. Und zwar ist die Bauteilfixierung 30 direkt im Gehäuseansatz 16 am Gehäusedeckel 5 verpresst, wie anhand der Fig. 8 zu sehen ist.

Der Signalaufnehmer 13 der ersten Messkomponente 6 ist auf einer abgewinkelt ausgestalteten Leiterplatte 17 befestigt. Die Leiterplatte 17 ist im Gehäusekörper 4 fixiert. Der Temperaturfühler 15 der zweiten Messkomponente 7 steht ebenfalls mit der Leiterplatte 17 in elektrischer Verbindung.

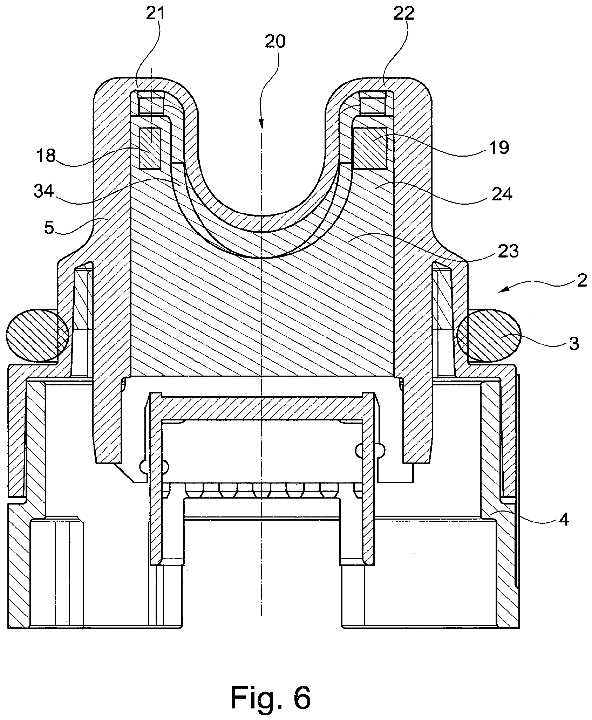

Wie man ebenfalls in Fig. 2 sieht, umfasst die dritte Messkomponente 8 einen Sender 18 sowie einen Empfänger 19 für optische Strahlung, und zwar vorliegend für Infrarot-Strahlung, sowie eine zwischen dem Sender 18 und dem Empfänger 19 befindliche, in Fig. 6 sichtbare Messstrecke 20 für das Fluid. Der Sender 18 und/oder der Empfänger 19 sind in einem Ansatz 21, 22, der in der Art einer höckerförmigen Ausbauchung ausgestaltet ist, am Gehäusedeckel 5 angeordnet. Der Ansatz 21, 22 ist wenigstens im Bereich des Senders 18 und/oder des Empfängers 19 für die optische Strahlung weitgehend transparent. Der Sender 18 und/oder der Empfänger 19 sind auf einem in den Ansatz 21, 22 hineinragenden Finger 24 einer weiteren Leiterplatte 23 befestigt. Die Leiterplatte 23 ist im Gehäusekörper 4 fixiert. Als Sender 18 ist eine Leuchtdiode vorgesehen. Als Empfänger 19 ist ein Fototransistor verwendet.

Auf der Leiterplatte 17, 23 befindet sich ein Anschlusskontakt für das von der jeweiligen Messkomponente 6, 7, 8 erzeugte Signal. Die Leiterplatte 17 ist mittels eines den Anschlusskontakt umgebenden Führungsrahmens 25 und die Leiterplatte 23 ist mittels eines den Anschlusskontakt umgebenden Führungsrahmens 26 im Gehäusekörper 4 fixierbar. Wie man anhand der Fig. 3 erkennt kann dann ein Stecker auf den Anschlusskontakt zur Signalweiterleitung am Führungsrahmen 25, 26 aufgesteckt werden.

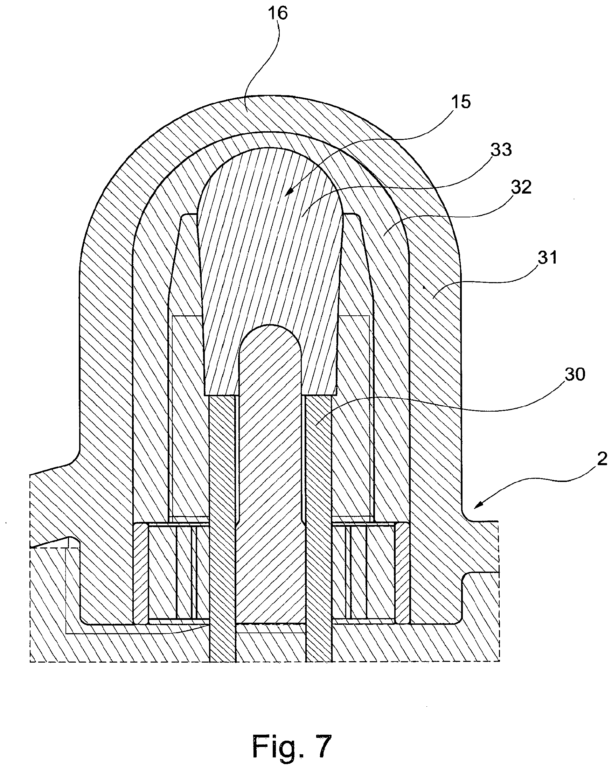

Zwecks elektrischer Isolation der Messkomponenten 6, 7, 8 kann eine zusätzliche elektrische Isolationsschicht 32 zwischen der Gehäusewandung 31 (siehe Fig. 7) des Gehäuses 2 und der jeweiligen Messkomponente 6, 7, 8 befindlich sein. Als Isolationsschicht 32 kann ein Verguss zwischen der Messkomponente 6, 7, 8 und der Gehäusewandung 31 vorgesehen sein, wobei der Verguss 32 eine Stärke von mindestens 2 mm besitzt. Dabei bietet es sich an, dass der Verguss 32 und die Gehäusewandung 31 form- und/oder stoffschlüssig aneinander gefügt sind.

Es können auch drei elektrische Isolationsschichten zwischen der Messkomponente 6, 7, 8 und dem Fluid und/oder den weiteren elektrischen Bauteilen angeordnet sein, beispielsweise indem zusätzlich zur elektrisch isolierenden Gehäusewandung 31 zwei weitere Isolationsschichten die Messkomponente 6, 7, 8 form- und/oder stoffschlüssig aneinander gefügt umgeben. Dies ist anhand des Temperaturfühlers 15 in Fig. 7 näher zu sehen. Der Temperaturfühler 15 besitzt eine Ummantelung 33 als Isolationsschicht bzw. als elektrische Basisisolierung. Weiter weist der Temperaturfühler 15 eine elektrische Zusatzisolierung in der Art eines Vergusses 32 sowie die Gehäusewandung 31 als weitere elektrische Isolierung auf. Die Basisisolierung 33 und/oder die Zusatzisolierung 32 können aus Epoxidharz bestehen.

Bei der dritten Messkomponente 8 zur Messung der Trübung des Fluids ist ebenfalls ein Verguss 34 als Isolationsschicht vorgesehen, wie in Fig. 6 zu sehen ist. Hierzu ist das Innere des Gehäuses 2 im Bereich des Senders 18 und/oder des Empfängers 19, und zwar am Ansatz 21, 22, mit einem für optische Strahlung weitgehend transparenten Verguss 34 als elektrische Isolation versehen. Der Verguss 34 besteht aus Silikonharz. Es bietet sich dabei an, den Verguss 34 für die Messkomponente 6, 7, 8 bis zur Leiterplatte 17 als elektrische Isolation vorzusehen, wie man in Fig. 5 sieht.

Ist der Sensor 1 im Hausgerät montiert, so ist ein Teil der in Fig. 1 bezeichneten Oberfläche 37 des Gehäuses 2 dem Fluid, das im Arbeitsraum des Hausgeräts befindlich ist, ausgesetzt. Zumindest dieser Teil der Oberfläche 37, der Einfachheit halber jedoch bevorzugt die gesamte Oberfläche 37 des Gehäuses 2, ist hydrophil ausgestaltet. Dadurch ist eine verbesserte Benetzung der Oberfläche 37 durch das Fluid gegeben, so dass die Ablagerung von Fremdkörpern auf der Oberfläche 37 des Gehäuses 2 verringert ist. Die Hydrophilierung der Oberfläche 37 des Gehäuses 2 kann durch eine Plasmaaktivierung der Oberfläche 37, und zwar insbesondere unter Sauerstoffatmosphäre und/oder unter Niederdruck, erfolgen. Zur Erzeugung der Hydrophilierung kann auch eine Fluorierung des Werkstoffes an der Oberfläche 37 des Gehäuses 2 vorgenommen werden.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann ein solcher Sensor 1, insbesondere in der Art eines Multisensors, nicht nur für Hausgeräte sondern auch in sonstigen Anwendungen, beispielsweise in der Heizungstechnik, in der Labortechnik und/oder in der chemischen Verfahrenstechnik eingesetzt werden.

### Bezugszeichen-Liste:

- 1:: Messvorrichtung / Sensor
- 2:: Gehäuse
- 3:: O-Ring
- 4:: Gehäusekörper (von Gehäuse)
- 5:: Gehäusedeckel (von Gehäuse)
- 6:: erste Messkomponente (zur Druckmessung)
- 7:: zweite Messkomponente (zur Temperraturmessung)
- 8:: dritte Messkomponente (zur Trübungsmessung)
- 9:: Rasthaken (an Gehäusedeckel)
- 10:: Membran
- 11:: elastisches Element / Blattfeder
- 12:: Signalgeber / Magnet
- 13:: Signalaufnehmer
- 14:: Öffnung
- 15:: Temperaturfühler
- 16:: Gehäuseansatz (am Gehäusedeckel)
- 17:: Leiterplatte (für erste und zweite Messkomponente)
- 18:: Sender (für optische Strahlung)
- 19:: Empfänger (für optische Strahlung)
- 20:: Messstrecke
- 21,22:: Ansatz (am Gehäusedeckel)
- 23:: Leiterplatte (für dritte Messkomponente)
- 24:: Finger (an Leiterplatte)
- 25,26:: Führungsrahmen
- 27:: Dom (am Gehäuse)
- 28:: Kammer
- 29:: Kontur (am Dom)
- 30:: Bauteilfixierung (für Temperaturfühler)
- 31:: Gehäusewandung
- 32:: Isolationsschicht / Verguss / Zusatzisolierung (für Temperaturfühler)
- 33:: Ummantelung / Isolationsschicht / Basisisolierung (von Temperaturfühler)
- 34:: Verguss (für die dritte Messkomponente)
- 35:: Federelement (von Blattfeder)
- 36:: Zentrum (der Blattfeder)
- 37:: Oberfläche (von Gehäuse)

## Patentansprüche

1. Messvorrichtung zur Messung einer Messgröße eines Fluids für Haushaltsgeräte, wie Waschmaschinen, Geschirrspülmaschinen o. dgl., mit einem Gehäuse (2), und mit einer im Gehäuse (2) befindlichen Messkomponente zur Messung der Messgröße, wobei eine erste Messkomponente (6) zur Messung des Drucks des Fluids, wobei eine zweite Messkomponente (7) zur Messung der Temperatur des Fluids, wobei eine dritte Messkomponente (8) zur Messung der Trübung des Fluids in dem einen Gehäuse (2) angeordnet sind, derart dass mehrere Messgrößen des Fluids, bei denen es sich vorzugsweise um Reinigungsparameter für den Betrieb des Haushaltsgeräts handelt, gleichzeitig messbar sind, und wobei das Gehäuse (2) aus einem Gehäusekörper (4) und einem Gehäusedeckel (5) besteht und das Gehäuse (2) mittels eines O-Rings als Dichtung derart im Haushaltsgerät anbringbar ist, dass der Gehäusedeckel (5) eine im Fluid befindliche und/oder dem Fluid ausgesetzte Oberfläche besitzt, und wobei ein Temperaturfühler (15) der zweiten Messkomponente (7) in einen Gehäuseansatz (16) am Gehäusedeckel (5) hineinragt und ein Sender (18) und ein Empfänger (19) für optische Strahlung der dritten Messkomponente (8) jeweils in einem Ansatz (21,22) am Gehäusedeckel angeordnet sind und wobei die erste Messkomponente (6) eine im und/oder am Gehäuse angeordnete Membran (10) umfasst
**dadurch gekennzeichnet, dass der**Gehäusedeckel (5) ein die Membran (10) überdeckenden Dom (27) und eine den Dom (27) umgebende Kontur (29) aufweist, und dass mindestens eine Öffnung (14) zur Zuführung des Fluids zur Membran (10) am Dom (27) und/oder an der Kontur (29) und/oder in einer Vertiefung zwischen dem Dom (27) sowie der Kontur (29) angeordnet sind und dass wenigstens der in montiertem Zustand im Arbeitsraum des Haushaltsgerätes dem Fluid ausgesetzte Teil der Oberfläche (37) des Gehäusedeckels (5) hydrophil ausgestaltet ist.

2. Messvorrichtung nach Anspruch 1, **dadurch gekennzeichnet, dass** ein Bestandteil der Messkomponente (7) in eine separate Bauteilfixierung (30), insbesondere aus Kunststoff bestehend, eingesetzt ist, und dass die Bauteilfixierung (30), insbesondere durch Verpressen, im Gehäuse (2) befestigt ist.

3. Messvorrichtung nach Anspruch 1, oder 2, **dadurch gekennzeichnet, dass** das Gehäuse (2) eine Gehäusewandung (31) aufweist, dass drei elektrische Isolationsschichten zwischen der Messkomponente (6, 7, 8) und dem Fluid und/oder den weiteren elektrischen Bauteilen angeordnet sind, insbesondere dass zusätzlich zur elektrisch isolierenden Gehäusewandung (31) zwei weitere elektrische Isolationsschichten (32, 33) die Messkomponente (7) umgeben, und dass vorzugsweise die Isolationsschichten form- und/oder stoffschlüssig aneinander gefügt sind.

4. Messvorrichtung nach einem der Ansprüche 1 bis 3, **dadurch gekennzeichnet, dass** das Gehäuse (2) eine Gehäusewandung (31) aufweist, dass ein elektrisch isolierender Verguss (32) zwischen der Messkomponente (7) und der Gehäusewandung (31) vorgesehen ist, und dass der Verguss (32) eine Stärke von mindestens 2 mm besitzt, wobei vorzugsweise der Verguss (32) und die Gehäusewandung (31) form- und/oder stoffschlüssig aneinander gefügt sind.

5. Messvorrichtung nach einem der Ansprüche 1 bis4, **dadurch gekennzeichnet, dass** dass der Gehäusedeckel (5) am Gehäusekörper (4) verrastet befestigt ist.

6. Messvorrichtung nach einem der Ansprüche 1 bis 5, **dadurch gekennzeichnet, dass** der Temperaturfühler (15) in den Gehäuseansatz (16) in der Art einer höckerförmigen Ausbauchung, am Gehäusedeckel (5) hineinragt, und dass noch weiter vorzugsweise als Temperaturfühler (15) ein NTC-Widerstand, ein PTC-Widerstand o. dgl. vorgesehen ist.

7. Messvorrichtung nach einem der Ansprüche 1 bis 6, **dadurch gekennzeichnet, dass** ein elastisches Element (11) zur Rückstellung der Membran (10) vorgesehen ist, dass weiter vorzugsweise ein Signalgeber (12) mit der Membran (10) und/oder dem elastischen Element (11) in Wirkverbindung steht, und dass noch weiter vorzugsweise ein Signalaufnehmer (13) mit dem Signalgeber (12), insbesondere magnetisch, zur Erzeugung der Messgröße zusammenwirkt.

8. Messvorrichtung nach Anspruch 7, **dadurch gekennzeichnet, dass** das elastische Element (11) in der Art einer scheibenförmigen Blattfeder ausgestaltet ist, dass vorzugsweise die Blattfeder (11) eine kreisförmige Gestalt besitzt, dass weiter vorzugsweise die Blattfeder (11) ein vom Zentrum (36) zum Randbereich der Blattfeder (11) spiralförmig verlaufendes Federelement (35) aufweist, und dass noch weiter vorzugsweise der Signalgeber (12) am elastischen Element (11) in dessen Zentrum (36), insbesondere durch Verkleben, befestigt ist.

9. Messvorrichtung nach einem der Ansprüche7 oder 8, **dadurch gekennzeichnet, dass** der Signalgeber (12) aus einem Magnet, insbesondere aus einem Permanentmagnet, besteht, dass vorzugsweise der Signalaufnehmer (13) aus einem das vorn Magneten (12) erzeugte Magnetfeld detektierenden Positionssensor, insbesondere aus einem Hallsensor, besteht.

10. Messvorrichtung nach einem der Ansprüche 7 bis 9, **dadurch gekennzeichnet, dass** der Signalaufnehmer (13) der ersten Messkomponente (6) auf einer Leiterplatte (17) befestigt ist, dass vorzugsweise die Leiterplatte (17) im Gehäusekörper (4) fixiert ist, und dass noch weiter vorzugsweise der Temperaturfühler (15) der zweiten Messkomponente (6) mit der Leiterplatte (17) in elektrischer Verbindung steht.

11. Messvorrichtung nach einem der Ansprüche 1 bis 10, **dadurch gekennzeichnet, dass** der Sender (18) sowie der Empfänger (19) ein Sender sowie ein Empfänger für Infrarot-Strahlung sind und dass der Sender (18) und der Empfänger (19) in dem Ansatz (21, 22) am Gehäusedeckel (5) in der Art einer höckerförmigen Ausbauchung, angeordnet sind, und dass weiter vorzugsweise der Ansatz (21, 22) wenigstens im Bereich des Senders (18) und/oder des Empfängers (19) für die optische Strahlung weitgehend transparent ist.

12. Messvorrichtung nach einem der Ansprüche 1 bis11, **dadurch gekennzeichnet, dass** der Sender (18) und/oder der Empfänger (19) auf einem in den Ansatz (21, 22) hineinragenden Finger (24) einer Leiterplatte (23) befestigt sind, dass vorzugsweise die Leiterplatte (23) im Gehäusekörper (4) fixiert ist, dass weiter vorzugsweise als Sender (18) eine Leuchtdiode vorgesehen ist, und dass noch weiter vorzugsweise als Empfänger (19) ein Fototransistor verwendet ist.

13. Messvorrichtung nach Anspruch 12, **dadurch gekennzeichnet, dass** sich auf der Leiterplatte (17, 23) ein Anschlusskontakt für das von der jeweiligen Messkomponente (6, 7, 8) erzeugte Signal befindet, dass vorzugsweise die Leiterplatte (17, 23) mittels eines den Anschlusskontakt umgebenden Führungsrahmens (25, 26) im Gehäusekörper (4) fixierbar ist, und dass weiter vorzugsweise ein Stecker auf den Anschlusskontakt zur Signalweiterleitung, insbesondere am Führungsrahmen (25, 26), aufsteckbar ist.

14. Messvorrichtung nach einem der Ansprüche 1 bis 13, **dadurch gekennzeichnet, dass** der Temperaturfühler (15) eine Ummantelung (33) als elektrische Basisisolierung, eine elektrische Zusatzisolierung (32) in der Art eines Vergusses sowie die Gehäusewandung (31) als weitere elektrische Isolierung aufweist, wobei insbesondere die Basisisolierung (33) und/oder die Zusatzisolierung (32) aus Epoxidharz bestehen, dass vorzugsweise das Innere des Gehäuses (2) im Bereich des Senders (18) und/oder des Empfängers (19), insbesondere der Ansatz (21, 22), mit einem für optische Strahlung weitgehend transparenten Verguss (34), insbesondere bestehend aus Silikonharz, als elektrische Isolation versehen ist, und dass weiter vorzugsweise die Messkomponente (6, 7, 8) bis zur Leiterplatte (17, 23) mit einem Verguss (34) als elektrische Isolation versehen ist.

15. Messvorrichtung nach einem der Ansprüche 1 bis 14, **dadurch gekennzeichnet, dass** die Hydrophilierung der Oberfläche (37) des Gehäuses (2) durch eine Plasmaaktivierung der Oberfläche (37), insbesondere unter Sauerstoffatmosphäre und/oder unter Niederdruck, und/oder durch eine Fluorierung des Werkstoffes für das Gehäuse (2), insbesondere für die Oberfläche (37) des Gehäuses (2), erzeugt ist.

## Claims

1. A measuring device for measuring a measured variable of a fluid for household appliances, such as washing machines, dishwashers, or the like, comprising a housing (2), and comprising a measuring component located in the housing (2) for measuring the measured variable, wherein a first measuring component (6) for measuring the pressure of the fluid, wherein a second measuring component (7) for measuring temperature of the fluid, wherein a third measuring component (8) for measuring the turbidity of the fluid are arranged in the one housing (2) in such a way that several measured variables of the fluid, which are preferably cleaning parameters for the operation of the household appliance, can be measured simultaneously, and wherein the housing (2) consists of a housing body (4) and a housing over (5), and the housing (2) can be attached by means of an O-ring as seal in the household appliance in such a way that the housing cover (5) has a surface, which is located in the fluid and/or which is exposed to the fluid, and wherein a temperature sensor (15) of the second measuring component (7) protrudes into a housing shoulder (16) at the housing cover (5), and a sender (18) and a receiver (19) for optical radiation of the third measuring component (8) are in each case arranged in a shoulder (21, 22) at the housing cover, and wherein the first measuring component (6) comprises a membrane (10) arranged in and/or at the housing,
**characterized in that** the housing cover (5) has a mandrel (27) covering the membrane (10), and a contour (29) surrounding the mandrel (27), and that at least one opening (14) for supplying the fluid to the membrane (10) is arranged at the mandrel (27) and/or at the contour (29) and/or in a depression between the mandrel (27) as well as the contour (29), and that at least the portion of the surface (37) of the housing cover (5), which, in the mounted state in the working space of the household appliances, is exposed to the fluid, is designed to be hydrophilic.

2. The measuring device according to claim 1, **characterized in that** a part of the measuring component (7) is inserted into a separate component fixation (30), in particular consisting of plastic, and that the component fixation (30) is fastened in the housing (2), in particular by means of compression.

3. The measuring device according to claim 1 or 2, **characterized in that** the housing (2) has a housing wall (31), that three electrical insulation layers are arranged between the measuring component (6, 7, 8) and the fluid and/or the further electrical components, in particular that, in addition to the electrically insulating housing wall (31), two further electrical insulation layers (32, 33) surround the measuring component (7), and that the insulation layers are preferably joined together in a positive manner and/or by means of a substance-to-substance bond.

4. The measuring device according to any one of claims 1 to 3, **characterized in that** the housing (2) has a housing wall (31), that an electrically insulating encapsulation (32) is provided between the measuring component (7) and the housing wall (31), and that the encapsulation (32) has a thickness of at least 2 mm, wherein the encapsulation (32) and the housing wall (31) are preferably joined together in a positive manner and/or by means of a substance-to-substance bond.

5. The measuring device according to any one of claims 1 to 4, **characterized in that** the housing cover (5) is fastened so as to locked into place at the housing body (4).

6. The measuring device according to any one of claims 1 to 5, **characterized in that** the temperature sensor (15) protrudes into the housing shoulder (16) in the manner of a hump-shaped bulge at the housing cover (5), and that an NTC resistor, a PTC resistor, or the like is provided even more preferably as temperature sensor (15).

7. The measuring device according to any one of claims 1 to 6, **characterized in that** an elastic element (11) for restoring the membrane (10) is provided, that a signal generator (12) is more preferably in operative connection with the membrane (10) and/or with the elastic element (11), and that even more preferably a signal receiver (13) cooperates with the signal generator (12), in particular magnetically, to generate the measured variable.

8. The measuring device according to claim 7, **characterized in that** the elastic element (11) is designed in the manner of a disk-shaped leaf spring, that the leaf spring (11) preferably has a circular shape, that the leaf spring (11) more preferably has a spring element (35), which runs helically from the center (36) to the edge region of the leaf spring (11), and that the signal generator (12) is even more preferably fastened to the elastic element (11) in the center (36) thereof, in particular by means of adhesion.

9. The measuring device according to any one of claims 7 or 8, **characterized in that** the signal generator (12) consists of a magnet, in particular of a permanent magnet, that the signal receiver (13) preferably consists of a position sensor, in particular of a Hall sensor, which detects the magnetic field generated by the magnet (12).

10. The measuring device according to any one of claims 7 to 9, **characterized in that** the signal receiver (13) of the first measuring component (6) is fastened to a printed circuit board (17), that the printed circuit board (17) is preferably fixed in the housing body (4), and that the temperature sensor (15) of the second measuring component (6) is even more preferably in electrical contact with the printed circuit board (17).

11. The measuring device according to any one of claims 1 to 10, **characterized in that** the sender (18) as well as the receiver (19) are a sender as well as a receiver for infrared radiation, and that the sender (18) and the receiver (19) are arranged in the shoulder (21, 22) at the housing cover (5) in the manner of a hump-shaped bulge, and that the shoulder (21, 22) is more preferably largely transparent for the optical radiation at least in the region of the sender (18) and/or of the receiver (19).

12. The measuring device according to any one of claims 1 to 11, **characterized in that** the sender (18) and/or the receiver (19) are fastened to a finger (24) of a printed circuit board (23), which protrudes into the shoulder (21, 22), that the printed circuit board (23) is preferably fixed in the housing body (4), that a light-emitting diode is more preferably provided as sender (18), and that a phototransistor is even more preferably used as receiver (19).

13. The measuring device according to claim 12, **characterized in that** a connecting contact for the signal generated by the respective measuring component (6, 7, 8) is located on the printed circuit board (17, 23), that the printed circuit board (17, 23) can preferably be fixed in the housing body (4) by means of a guide frame (25, 26) surrounding the connecting contact, and that a plug can more preferably be inserted into the connecting contact for signal forwarding, in particular at the guide frame (25, 26).

14. The measuring device according to any one of claims 1 to 13, **characterized in that** the temperature sensor (15) has a casing (33) as electrical base insulation, an electrical additional insulation (32) in the manner of an encapsulation, as well as the housing wall (31) as further electrical insulation, wherein in particular the base insulation (33) and/or the additional insulation (32) consist of epoxy resin, that, in the region of the sender (18) and/or of the receiver (19), the interior of the housing (2), in particular the shoulder (21, 22), is provided with an encapsulation (34) as electrical insulation, which is largely transparent for optical radiation, in particular consisting of silicon resin, and that, up to the printed circuit board (17, 23), the measuring component (6, 7, 8) is more preferably provided with an encapsulation (34) as electrical insulation.

15. The measuring device according to any one of claims 1 to 14, **characterized in that** the hydrophilization of the surface (37) of the housing (2) is generated by means of a plasma activation of the surface (37), in particular under oxygen atmosphere, and/or under low pressure, and/or by means of a fluorination of the material for the housing (2), in particular for the surface (37) of the housing (2).

## Revendications

1. Dispositif de mesure destiné à la mesure d'une grandeur de mesure d'un fluide pour des appareils ménagers comme des lave-linges, des lave-vaisselles ou similaire, comprenant un logement (2) et comprenant une composante de mesure se trouvant dans le logement (2) pour mesurer la grandeur de mesure, dans lequel une première composante de mesure (6) pour mesurer la pression du fluide, dans lequel une deuxième composante de mesure (7) pour mesurer la température du fluide, dans lequel une troisième composante de mesure (8) pour mesurer la turbidité du fluide sont disposées dans l'un logement (2), de telle façon que plusieurs grandeurs de mesure du fluide, pour lesquelles il s'agit de préférence de paramètres de nettoyage pour le fonctionnement de l'appareil ménager, puissent être mesurées en même temps, et dans lequel le logement (2) est composé d'un corps de logement (4) et d'un couvercle de logement (5), et le logement (2) peut être posé dans l'appareil ménager au moyen d'un joint torique en tant que joint de telle façon que le couvercle de logement (5) possède une surface se trouvant dans le fluide et/ou exposée au fluide, et dans lequel une sonde de température (15) de la deuxième composante de mesure (7) fait saillie dans un épaulement du logement (16) sur le couvercle du logement (5), et un émetteur (18) et un récepteur (19) pour un rayonnement optique de la troisième composante de mesure (8) sont disposés respectivement dans un épaulement (21, 22) sur le couvercle de logement, et dans lequel la première composante de mesure (6) comprend une membrane (10) disposée dans et/ou sur le logement,
**caractérisé en ce que** le couvercle de logement (5) présente une coupole (27) recouvrant la membrane (10) et un contour (29) entourant la coupole (27), et qu'au moins une ouverture (14) pour amener le fluide vers la membrane (10) est disposée sur la coupole (27) et/ou sur le contour (29) et/ou dans un renfoncement entre la coupole (27) et le contour (29) et qu'au moins la partie de la surface (37) du couvercle de logement (5) exposée au fluide dans l'espace de travail de l'appareil ménager à l'état monté est conçue hydrophile.

2. Dispositif de mesure selon la revendication 1, **caractérisé en ce qu'**une partie de la composante de mesure (7) est disposée dans une fixation de pièce (30) séparée, en particulier en plastique, et que la fixation de pièce (30) est fixée dans le logement (2), en particulier par pression.

3. Dispositif de mesure selon la revendication 1 ou 2, **caractérisé en ce que** le logement (2) présente une paroi de logement (31), que trois couches isolantes électriques sont disposées entre la composante de mesure (6, 7, 8) et le fluide et/ou les autres pièces électriques, en particulier qu'en plus de la paroi de logement (31) isolante électrique, deux autres couches isolantes électriques (32, 33) entourent la composante de mesure (7) et que de préférence, les couches isolantes sont jointes l'une à l'autre par complémentarité de forme et/ou de matière.

4. Dispositif de mesure selon l'une des revendications 1 à 3, **caractérisé en ce que** le logement (2) présente une paroi de logement (31), qu'une masse d'enrobage (32) isolante électrique est prévue entre la composante de mesure (7) et la paroi de logement (31) et que la masse d'enrobage (32) possède une épaisseur d'au moins 2 mm, dans lequel de préférence, la masse d'enrobage (32) et la paroi de logement (31) sont jointes l'une à l'autre par complémentarité de forme et/ou de matière.

5. Dispositif de mesure selon l'une des revendications 1 à 4, **caractérisé en ce que** le couvercle de logement (5) est fixé sur le corps de logement (4) par encliquetage.

6. Dispositif de mesure selon l'une des revendications 1 à 5, **caractérisé en ce que** la sonde de température (15) fait saillie dans l'épaulement de logement (16) à la manière d'un renflement formant une bosse, sur le couvercle de logement (5), et que de manière encore plus préférée, une résistance NTC, une résistance PTC ou similaire est prévue en tant que sonde de température (15).

7. Dispositif de mesure selon l'une des revendications 1 à 6, **caractérisé en ce qu'**un élément élastique (11) est prévu pour le retour de la membrane (10), que de manière plus préférée, un indicateur de signal (12) est en liaison active avec la membrane (10) et/ou l'élément élastique (11), et que de manière encore plus préférée, un récepteur de signal (13) coopère avec l'indicateur de signal (12), en particulier de façon magnétique, pour produire la grandeur de mesure.

8. Dispositif de mesure selon la revendication 7 **caractérisé en ce que** l'élément élastique (11) est conçu à la manière d'un ressort à lame en forme de disque, que de préférence, le ressort à lame (11) a une forme circulaire, que de manière plus préférée, le ressort à lame (11) présente un élément de ressort (35) partant en spirale du centre (36) vers le bord du ressort à lame (11), et que de manière encore plus préférée, l'indicateur de signal (12) est fixé dans le centre (36) de l'élément élastique (11), en particulier par collage.

9. Dispositif de mesure selon l'une des revendications 7 ou 8, **caractérisé en ce que** l'indicateur de signal (12) est composé d'un aimant, en particulier d'un aimant permanent, que de préférence le récepteur de signal (13) est composé d'un capteur de position détectant le champ magnétique produit par des aimants (12), en particulier d'un capteur à effet Hall.

10. Dispositif de mesure selon l'une des revendications 7 à 9, **caractérisé en ce que** le récepteur de signal (13) de la première composante de mesure (6) est fixé sur une plaque conductrice (17), que de préférence la plaque conductrice (17) est fixée dans le corps de logement (4) et que de manière encore plus préférée, la sonde de température (15) de la deuxième composante de mesure (6) est en liaison électrique avec la plaque conductrice (17).

11. Dispositif de mesure selon l'une des revendications 1 à 10, **caractérisé en ce que** l'émetteur (18) ainsi que le récepteur (19) sont un émetteur ainsi qu'un récepteur pour les rayons infrarouges et que l'émetteur (18) et le récepteur (19) sont disposés dans l'épaulement (21, 22) sur le couvercle de logement (5) à la manière d'un renflement en forme de bosse, et que de manière plus préférée, l'épaulement (21, 22) est transparent dans une large mesure au rayonnement optique, au moins au niveau de l'émetteur (18) et/ou du récepteur (19).

12. Dispositif de mesure selon l'une des revendications 1 à 11, **caractérisé en ce que** l'émetteur (18) et/ou le récepteur (19) sont fixés sur un doigt (24) d'une plaque conductrice (23) faisant saillie dans l'épaulement (21, 22), que de préférence, la plaque conductrice (23) est fixée dans le corps de logement (4), que de manière plus préférée, une diode lumineuse est prévue en tant qu'émetteur (18) et que de manière encore plus préférée, un phototransistor est employé en tant que récepteur (19).

13. Dispositif de mesure selon la revendication 12, **caractérisé en ce qu'**un contact de connexion pour le signal produit par la composante de mesure (6, 7, 8) respective se trouve sur la plaque conductrice (17, 23), que de préférence la plaque conductrice (17, 23) peut être fixée au moyen d'un cadre de guidage (25, 26) entourant le contact de connexion dans le corps de logement (4) et que de manière plus préférée, une prise mâle peut être enfichée sur le contact de connexion, en particulier sur le cadre de guidage (25, 26), pour transmettre le signal.

14. Dispositif de mesure selon l'une des revendications 1 à 13, **caractérisé en ce que** la sonde de température (15) présente une enveloppe (33) en tant qu'isolation électrique de base, une isolation électrique supplémentaire (32) à la manière d'une masse d'enrobage ainsi que la paroi de logement (31) en tant qu'autre isolation, dans lequel en particulier l'isolation de base (33) et/ou l'isolation supplémentaire (32) sont en résine époxy, que de préférence l'intérieur du logement (2) est doté au niveau de l'émetteur (18) et/ou du récepteur (19), en particulier l'épaulement (21, 22), d'une masse d'enrobage (34) transparente dans une large mesure au rayonnement optique, composée en particulier de résine de silicone, en tant qu'isolation électrique, et que de manière plus préférée, la composante de mesure (6, 7, 8) est dotée d'une masse d'enrobage (34) en tant qu'isolation électrique jusqu'à la plaque conductrice (17, 23).

15. Dispositif de mesure selon l'une des revendications 1 à 14, **caractérisé en ce que** l'hydrophilisation de la surface (37) du logement (2) est produite par une activation plasma de la surface (37), en particulier sous atmosphère d'oxygène et/ou en sous-pression, et/ou par une fluorisation du matériau pour le logement (2), en particulier pour la surface (37) du logement (2).
